# EUROPEAN PATENT SPECIFICATION

(11) **EP 3 439 301 B1**
(45) Date of publication and mention of the grant of the patent: **13.01.2021**
(21) Application number: 17775836.4
(22) Date of filing: 29.03.2017
(51) Int. Cl.: H04N 9/09, H04N 5/335, H04N 5/225, H04N 9/04, H04N 5/232

(54) **IMAGE PROCESSING APPARATUS AND MOBILE TERMINAL**
BILDVERARBEITUNGSVORRICHTUNG UND MOBILES ENDGERÄT
APPAREIL DE TRAITEMENT D'IMAGE, ET TERMINAL MOBILE

(30) Priority: 30.03.2016 US 201662315015 P
(43) Date of publication of application: 06.02.2019
(73) Proprietor: LG Electronics Inc., Seoul 07336 (KR)
(72) Inventor: CHAE, Kyuyeol, Seoul 06772 (KR); LEE, Kwon, Seoul 06772 (KR)
(74) Representative: Frenkel, Matthias Alexander
(86) International application number: PCT/KR2017/003451
(87) International publication number: WO 2017/171412

(56) References cited:
- EP-A2- 2 642 757
- WO-A1-2014/083489
- JP-A- 2011 176 710
- KR-A- 20070 117 776
- KR-A- 20120 021 762
- KR-A- 20120 040 766
- KR-A- 20140 054 797
- US-A1- 2008 068 477

## Description

### [Technical Field]

The present invention relates to an image processing apparatus and, more particularly, to an image processing apparatus and a mobile terminal for synthesizing a plurality of images to generate a high-quality image.

### [Background Art]

An image processing apparatus may mean an apparatus for processing image data acquired from an image sensor or a camera including the same to generate an image. Such an image processing apparatus may be included in various types of electronic apparatuses, vehicles or robots including an image sensor.

Representative examples of an electronic apparatus including an image processing apparatus include a mobile terminal such as a smartphone. As performance of the mobile terminal widely used by persons are gradually improved, various functions or technologies have been added.

Recently, mobile terminals including a plurality of cameras (e.g., dual camera) mounted on one surface thereof have appeared. For example, the mobile terminal may generate a three-dimensional image using images acquired from the dual camera. In addition, the mobile terminal including the dual camera having different angles of view may provide images having various angles of view to a user.

Meanwhile, in general, the size of the image sensor provided in the mobile terminal may be limited due to limit in the size of the mobile terminal. In this case, as the amount of light received by the image sensor is insufficient under a low-luminance condition, the brightness of the generated image may be low and thus quality of the image may be lowered.

In order to solve this, a mobile terminal including a camera having a color image sensor (e.g., an RGB sensor) and a camera having a mono image sensor (e.g., a monochrome sensor) has appeared. Such a mobile terminal synthesizes a color image acquired by the color image sensor and a mono image acquired by the mono image sensor having a larger amount of received light than the color image sensor to provide a brighter image under a low-luminance condition.

Meanwhile, the positons of the color image sensor and the mono image sensor provided in the mobile terminal are different from each other. Therefore, the image sensors have different points of view. As a result, disparity occurs between the color image and the mono image generated by the image sensors.

Since the mono image has only brightness information, the mobile terminal performs disparity correction and synthesis using only the brightness information of the two images. Therefore, accuracy of disparity correction may be lowered and, as a result, color errors may occur in a portion of the synthesized image, thereby lowering the quality of the image WO2014/083489A discloses merging images from an RGB CFA sensor and from another sensor with a different CFA and different FOV in order to produce an enhanced image.

### [Disclosure]

### [Technical Problem]

An object of the present invention is to provide an image processing apparatus for synthesizing images acquired from a plurality of image sensors having different properties to generate a high-quality image.

Another object of the present invention is to provide an image processing apparatus capable of minimizing color errors of an image obtained by synthesizing images acquired from a plurality of image sensors and increasing accuracy.

### [Technical Solution]

The object of the present invention can be achieved by providing an image processing apparatus according to claim 1 and including a first image sensor having a first pixel array including blocks each including a red pixel, a green pixel and a blue pixel, a second image sensor having a second pixel array including blocks each including at least one of a red pixel and a blue pixel, and a white pixel, and a controller configured to generate a third image using a first image acquired from the first image sensor and a second image acquired from the second image sensor.

The controller may generate the third image based on color information of the first image and the second image.

The controller may search for a second block having color information, a difference with first color information of which is within a reference value, among blocks included in the first image, using the first color information including at least one of red color information and blue color information of a first block included in the second image, and replace the color information of the first block with the color information of the second block based on the result of search.

The controller may search for the second block using brightness information of the first block.

The first image sensor and the second image sensor may be different in terms of a point of view, and the controller may crop a remaining region excluding a common region of the first image and the second image and generate the third image using the cropped first and second images.

An angle of view of the second image sensor may be less than that of the first image sensor, and the controller may crop a portion of the first image to correspond to a display region of the second image and generate the third image using the cropped first image and the second image.

The second pixel array of the second image sensor may include blocks having a size of 2×2 pixels and including the red pixel, the blue pixel and two white pixels.

The second pixel array of the second image sensor may include blocks having a size of 2×2 pixels and including any one of the red pixel and the blue pixel, and three white pixels.

A color pixel of a first block included in the second pixel array and a color pixel of a second pixel adjacent to the first block in a horizontal direction or a vertical direction may be different from each other.

In another aspect of the present invention, provided herein is an image processing apparatus including a first image sensor configured to acquire a first image, a second image sensor configured to acquire a second image, and a controller configured to synthesize the first image and the second image based on color information of the first image and the second image and to generate a third image based on the result of synthesis.

At least a portion of a region included in the first image and at least a portion of a region included in the second image may correspond to each other, and the controller may crop a remaining region excluding the portions of the first and second images corresponding to each other and generate the third image using the cropped first and second images.

The second image may correspond to a zoom image of a partial region of the first image, and the controller may crop a remaining region excluding the partial region of the first image.

In another aspect of the present invention, provided herein is a mobile terminal including a first image sensor having a first pixel array including blocks each including a red pixel, a green pixel and a blue pixel, a second image sensor having a second pixel array including blocks each including at least one of a red pixel and a blue pixel, and a white pixel, a display unit configured to display an image acquired from at least one of the first image sensor and the second image sensor, and a controller configured to control operation of the first image sensor, the second image sensor and the display unit.

The controller may synthesize a first image and a second image based on color information of the first image acquired from the first image sensor and color information of the second image acquired from the second image and generate a third image based on the result of synthesis.

The mobile terminal may further include at least one of a memory configured to store the generated third image and a communication unit configured to transmit the generated third image to the outside.

### [Advantageous Effects]

According to various embodiments of the present invention, an image processing apparatus includes a plurality of image sensors including an image sensor including at least one of a red pixel and a blue pixel, and a white pixel. An image acquired by the above-described image sensor may have higher brightness and resolution, as compared with an image acquired by a general RGB sensor. Accordingly, the image processing apparatus can generate a higher-quality image when the images acquired by the plurality of image sensors are synthesized.

In addition, the image acquired by the image sensor includes red color information and blue color information. That is, unlike a conventional image processing apparatus for performing image synthesis using only brightness information, the image processing apparatus according to the embodiment of the present invention may perform synthesis operation using the color information of the images acquired by the plurality of image sensors. Accordingly, by minimizing the color errors of the synthesized image, it is possible to improve accuracy and to increase product reliability and satisfaction of a user.

### [Description of Drawings]

FIG. 1 is a schematic block diagram of an image processing apparatus according to an embodiment of the present invention.
FIG. 2A is a block diagram illustrating a mobile terminal as an example of the image processing apparatus shown in FIG. 1.
FIGS. 2B and 2C are conceptual views of one example of the mobile terminal, viewed from different directions.
FIGS. 3 and 4 are diagrams showing pixel patterns of a first image sensor and a second image sensor included in an image processing apparatus according to an embodiment of the present invention.
FIG. 5 is a flowchart illustrating a method of operating an image processing apparatus according to an embodiment of the present invention.
FIGS. 6 to 8 are diagrams schematically showing the method of operating the image processing apparatus shown in FIG. 5.
FIG. 9 is a flowchart illustrating a method of operating an image processing apparatus according to an embodiment of the present invention.
FIGS. 10 to 13 are diagrams showing the method of operating the image processing apparatus shown in FIG. 9 in detail.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signage and the like.

Hereinafter, embodiments of the present invention will be described in detail with reference to the drawings attached hereto.

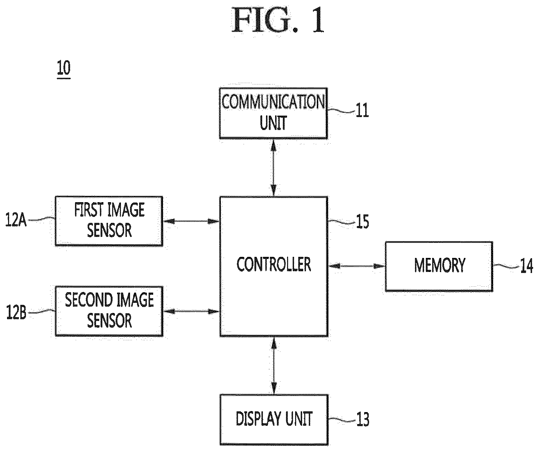

FIG. 1 is a schematic block diagram of an image processing apparatus according to an embodiment of the present invention.

Referring to FIG. 1, the image processing apparatus 10 may mean an apparatus for acquiring image data through a camera or a network, processing the acquired image data to generate an image, and outputting or transmitting the generated image to the outside through the network. Such an image processing apparatus 10 may correspond to various electronic apparatuses, vehicles or robots such as mobile terminals, digital cameras or CCTVs. In some cases, the image processing apparatus 10 may be understood as one component included in the various electronic apparatuses, vehicles or robots.

For example, the image processing apparatus 10 may include a communication unit 11, a first image sensor 12A, a second image sensor 12B, a display unit 13, a memory 14 and a controller 15. The components shown in FIG. 1 are not mandatory in implementation of the image processing apparatus 10 and thus the image processing apparatus 10 may include more or fewer components than those described above.

The communication unit 11 may include one or more modules for performing data transmission and reception between the image processing apparatus 10 and various external communication apparatuses or systems. The image processing apparatus 10 may receive an image from the outside through the communication unit 11 or transmit an image generated by the image processing apparatus 10. The communication unit 11 may include at least one module supporting a wireless communication method and/or a wired communication method.

The first image sensor 12A (or a first camera) and the second image sensor 12B (or a second camera) may convert an optical image into an electrical image. The first image sensor 12A and the second image sensor 12B may be implemented by complementary metal-oxide-semiconductor (CMOS) image sensors, without being limited thereto.

According to the embodiment of the present invention, the image processing apparatus 10 may include the first image sensor 12A and the second image sensor 12B having different performances or properties. For example, the first image sensor 12A and the second image sensor 12B may be different in terms of an angle of view, a pixel pattern or resolution. In this case, the images acquired by the first image sensor 12A and the second image sensor 12B may be different from each other.

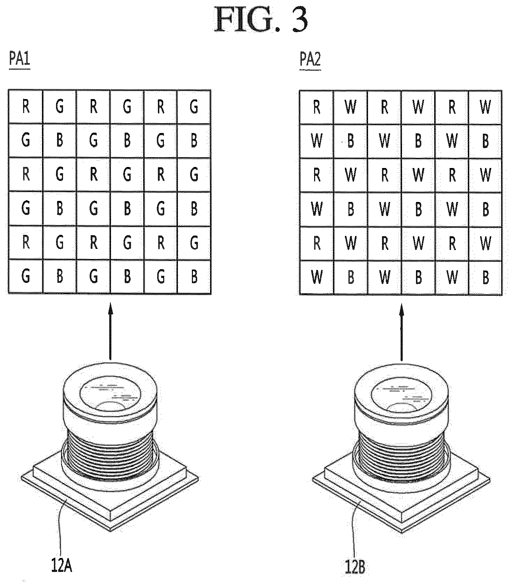

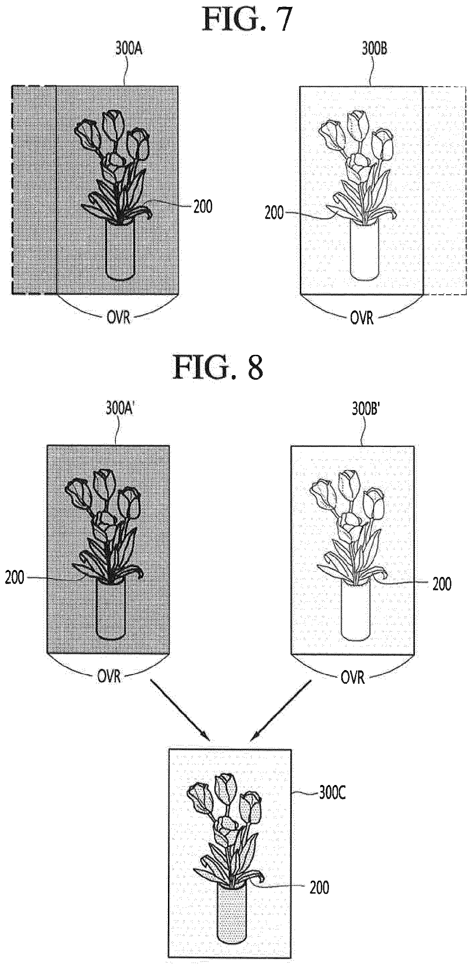

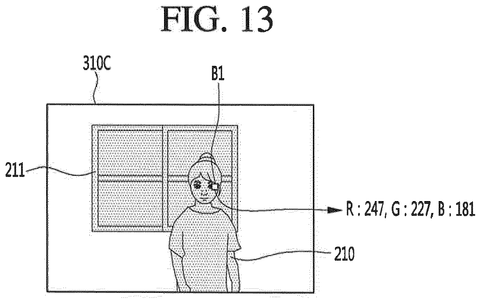

The controller 15 may process the electrical signals converted by the image sensors 12A and 12B to acquire an image. For example, the controller 15 may acquire the images from the first image sensor 12A and the second image sensor 12B. In addition, the controller 15 may synthesize the different images acquired from the first image sensor 12A and the second image sensor 12B to generate one composite image. In this case, the quality of the generated composite image may be higher than that of each of the images acquired from the first image sensor 12A and the second image sensor 12B. Various embodiments thereof will be described later with reference to FIGS. 3 to 13.

The controller 15 may be implemented by a CPU or an application processor (AP) or may be included in the CPU or the AP. However, the controller 15 is not limited to the above-described configuration and may be implemented by a chip (e.g., a digital signal processor (DSP), an image signal processor (ISP), a graphic processing unit (GPU), etc.) provided independently of the CPU or the AP.

The image processing apparatus 10 may display the acquired image through the display unit 13 and store the acquired image in the memory 14. In some embodiments, the image processing apparatus 10 may transmit the acquired image to the outside through the communication unit 11.

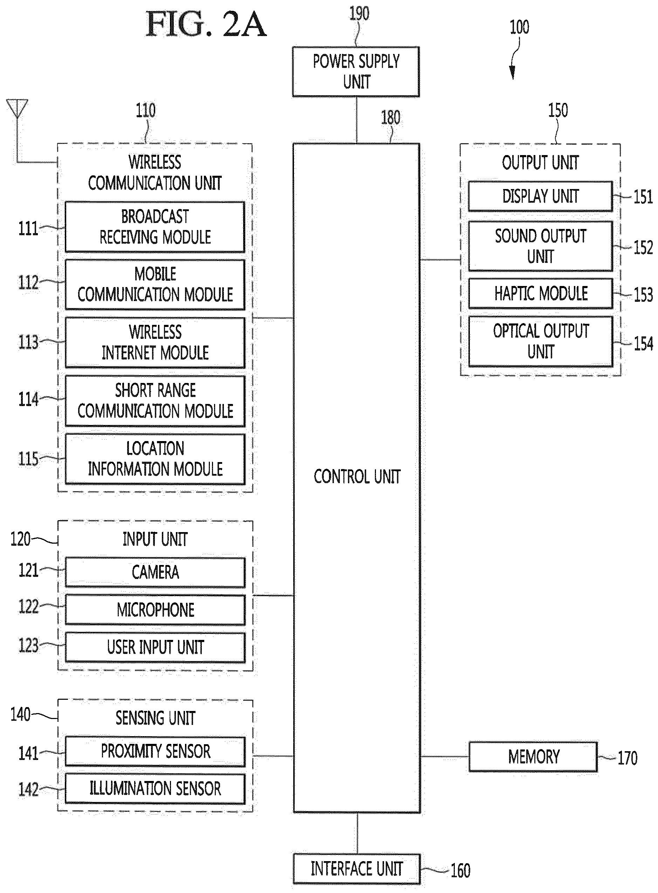

The communication unit 11, the display unit 13 and the memory 14 will be described in greater detail with reference to FIG. 2A.

Hereinafter, a mobile terminal as an example of the image processing apparatus 10 will be described with reference to FIGS. 2A to 2C.

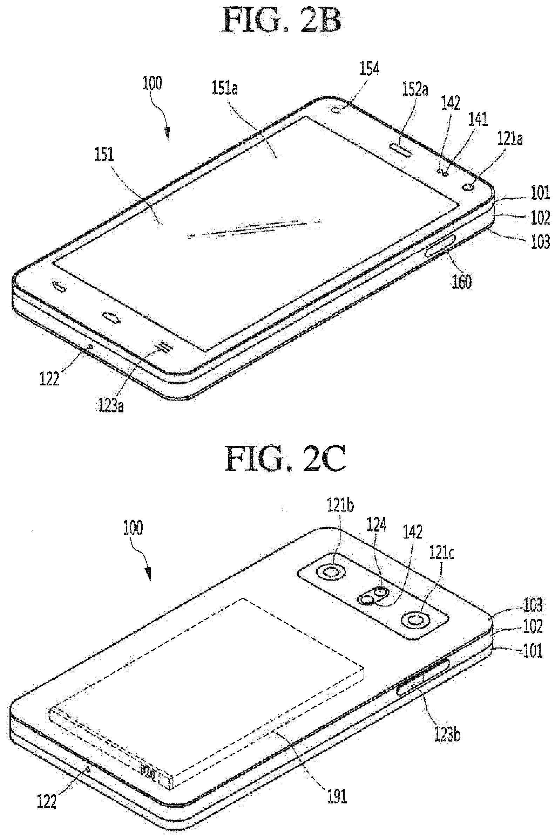

Referring to FIGS. 2A to 2C, FIG. 2A is a block diagram illustrating the mobile terminal as one example of the image processing apparatus shown in FIG. 1, and FIGS. 2B and 2C are views showing one example of the mobile terminal described with respect to FIG. 2A when viewed in different directions.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, digital signage and the like.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 2A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Figs. 2A, or activating application programs stored in the memory 170.

As one example, the controller 180 controls some or all of the components illustrated in FIG. 2A to 2C according to the execution of an application program that have been stored in the memory 170. Further, the controller 180 may operate by combining at least two of the components included in the mobile terminal 100, in order to execute the application program.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Hereinafter, prior to various embodiments implemented through the above-described mobile terminal 100, the components described above will be described in greater detail with FIG. 2A.

Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The broadcast managing entity may be a server which generates and transmits a broadcast signal and/or broadcast associated information, or a server which receives a pre-generated broadcast signal and/or broadcast associated information, and sends such items to the mobile terminal.

The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 2B and 2C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The terminal body may be understood as the concept of referring to the mobile terminal as at least one assembly.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151 a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal includes a display unit 151, a first and a second audio output modules 151a/151b, a proximity sensor 141, an illumination sensor 142, an optical output module 154, a first and a second cameras 121a/121b, a first and a second manipulation units 123a/123b, a microphone 122, interface unit 160 and the like.

It will be described for the mobile terminal as shown in FIGS. 2B and 2C. The display unit 151, the first audio output module 151a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 151b and the second camera 121b are arranged in rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices.

Examples of such suitable display devices 151 include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 2A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 2B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 2C, a flash 124 is shown adjacent to the second camera 121b. When an image of a subject is captured with the camera 121b, the flash 124 may illuminate the subject. As shown in FIG. 2B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

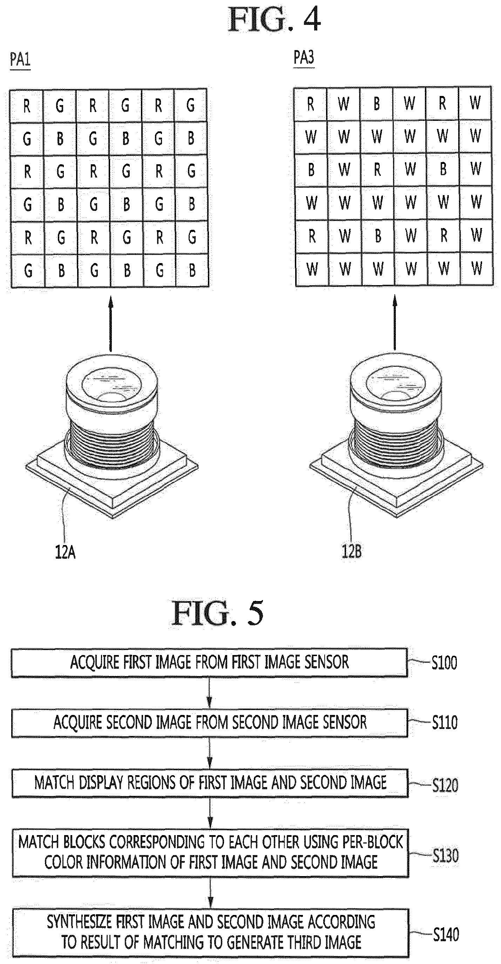

FIGS. 3 and 4 are diagrams showing pixel patterns of a first image sensor and a second image sensor included in an image processing apparatus according to an embodiment of the present invention.

As described above with reference to FIG. 1, the image processing apparatus 10 may include the first image sensor 12A and the second image sensor 12B having different performances or properties. The controller 15 of the image processing apparatus 10 may synthesize the first image acquired from the first image sensor 12A and the second image acquired from the second image sensor 12B to generate an image having improved quality.

In the related art, an image processing apparatus includes a first image sensor implemented by a color image sensor and a second image sensor implemented by a mono image sensor. In this case, a color image acquired by the color image sensor and a mono image acquired by the mono image sensor having a larger amount of received light than the color image sensor may be synthesized to provide a brighter image under a low-luminance condition.

Meanwhile, the positons of the color image sensor and the mono image sensor provided in the image processing apparatus are different from each other due to physical limit. Therefore, since the image sensors have different points of view, disparity occurs between the color image and the mono image generated by the image sensors.

Since the mono image has only brightness information, the image processing apparatus performs disparity correction and synthesis using only the brightness information of the two images. Therefore, accuracy of disparity correction may be lowered and, as a result, color errors may occur in a portion of the synthesized image, thereby lowering the quality of the image.

In addition, since the amounts of light received by the first image sensor and the second image sensor are different from each other, the first image and the second image may be different in brightness information (brightness value) of the same region. Accordingly, when the image processing apparatus performs disparity correction using the brightness information, since a difference in brightness information between the two images is further considered, it is possible to reduce a processing speed.

According to the embodiment of the present invention, the image processing apparatus 10 includes an image sensor having a special pixel pattern instead of the mono image sensor, thereby preventing color errors generated when synthesizing the images and improving the processing speed.

Referring to FIG. 3, the first pixel array PA1 of the first image sensor 12A and the second pixel array PA2 of the second image sensor 12B may be different from each other. That is, the first image sensor 12A and the second image sensor 12B may have different pixel patterns.

The first pixel array PA1 of the first image sensor 12A may include blocks each having a size of 2×2 pixels and having a red pixel R, a green pixel G, a blue pixel B and a green pixel G arranged in a clockwise direction. That is, the pixel arrangement of the first image sensor 12A may correspond to the pixel arrangement of a general RGB sensor.

In the general RGB sensor, the red pixel may transmit only red light into the sensor, the green pixel may transmit only green light into the sensor, and the blue pixel may transmit only blue light into the sensor. Therefore, more accurate color values may be acquired, but the amount of received light may be lowered under a low-luminance condition, thereby decreasing brightness and resolution of the image.

In contrast, the second pixel array PA2 of the second image sensor 12B may include blocks each having a size of 2×2 pixels and having a red pixel R, a white pixel W, a blue pixel B and a white pixel W arranged in a clockwise direction. That is, the pixel arrangement of the second image sensor 12B may be different from that of the RGB sensor.

The white pixel does not include a color filter and may transmit light into the sensor. Accordingly, the second image sensor 12B may acquire an image having higher brightness and resolution than the first image sensor 12A.

Referring to FIG. 4, the third pixel array PA3 of the second image sensor 12B may have white pixels W greater in number than the number of white pixels W of the second pixel array PA2 of FIG. 3. Accordingly, the second image sensor 12B of FIG. 4 may acquire an image having higher brightness and resolution than the second image sensor 12B of FIG. 3.

Referring to the third pixel array PA3 shown in FIG. 4, each block having a size of 2×2 pixels may include one color pixel (R or B) and three white pixels W. The color pixel may be formed at an arbitrary position of the block.

In addition, the color pixels included in blocks adjacent in a horizontal direction and a vertical direction may be different from each other. For example, if the first block B1 includes the red pixel R, the second block B2 located at the right side of the first block B1 and the third block B3 located below the first block may include the blue pixel B.

The shape of the third pixel array PA3 is not limited to the embodiment shown in FIG. 4 and the number of white pixels W included in the third pixel array PA3 may be increased.

That is, in the second pixel array PA2 of FIG. 3 and the third pixel array PA3 of FIG. 4, each of the blocks of the pixel array included in the second image sensor 12B may include at least one of the red pixel R and the blue pixel B and at least two white pixels W.

Although not shown, in some embodiments, the first image sensor 12A and the second image sensor 12B may have different angles of view. For example, the angle of view of the second image sensor 12B may be less than that of the first image sensor 12A. In this case, the second image sensor 12B may function as a zoom camera.

Hereinafter, various embodiments of the method of operating the image processing apparatus 10 using the first image sensor 12A and the second image sensor 12B in which the pixel patterns shown in FIG. 3 or 4 are formed will be described with reference to FIGS. 5 to 13. In the following embodiments, the image processing apparatus 10 acquires the first image and the second image from the first image sensor 12A and the second image sensor 12B and synthesize the acquired first and second images, thereby generating the third image.

However, in some cases, the image processing apparatus 10 may acquire the first image and the second image from an external apparatus (camera) through the communication unit 11 and synthesize the acquired first and second images, thereby generating the third image.

FIG. 5 is a flowchart illustrating a method of operating an image processing apparatus according to an embodiment of the present invention.

Referring to FIG. 5, the image processing apparatus 10 may acquire the first image from the first image sensor 12A (S100) and acquire the second image from the second image sensor 12B (S110).

The first image and the second image may be acquired at the same time, without being limited thereto.

As described above, since the pixel patterns of the first image sensor 12A and the second image sensor 12B are different from each other, the acquired first and second images may be different from each other. Specifically, since the second image sensor 12B includes the white pixel W, the second image may have higher brightness and resolution than the first image. In contrast, since the second image sensor 12B does not include the green pixel G and restores green through software correction using brightness information, red color information and blue color information. Accordingly, the second image may have lower color accuracy than the first image.

The image processing apparatus 10 may match the display regions of the first image and the second image (S120).

Due to a difference in point of view or angle of view between the first image sensor 12A and the second image sensor 12B, the display regions of the first image and the second image may be different from each other. In this case, at least a portion included in the first image and at least a portion included in the second image may correspond to each other (or a common region). Since the quality of the regions which are not commonly included in the first image and the second image cannot be improved when the images are synthesized, the controller 15 may crop the region, which is not commonly included, of at least one of the first image and the second image.

The image processing apparatus 10 may match blocks corresponding to each other using the per-block color information of the first and second images, the display regions of which are matched (S130).

Since each of the first image sensor 12A and the second image sensor 12B includes color pixels, the first image and the second image acquired by the first image sensor 12A and the second image sensor 12B may have color information.

The controller 15 may match the blocks corresponding to each other using the per-block color information of the first image and the second image,

The per-block color information means color information acquired from each of the blocks included in the pixel array of the image sensor. The per-block color image may be acquired using the pixel value of the color pixel (R, G or B) included in the block or acquired using the statistical value (e.g., average value, etc.) of the pixel values of the color pixels included in the block. The block may have a pixel size of 2×2 pixels without being limited thereto and may have a predetermined pixel size.

In addition, the blocks corresponding to each other may mean that the blocks included in the pixel array of the first image sensor 12A and the blocks included in the pixel array of the second image sensor 12B have information on the same region.

Specifically, since the second image sensor 12B includes a red pixel R and a blue pixel B, the controller 15 may match the blocks corresponding to each other using the red color information of each block (e.g., the statistical value of the red color of each block) and/or the blue color information of each block (e.g., the statistical value of the blue color of each block).

For example, the controller 15 may search for a second block having color information equal or similar (a color information difference is within a reference value) to the color information of a first block among the blocks of the second image within a predetermined distance from the position corresponding to the first block of the first image. Based on the result of search, the controller 15 may match the first block and the second block.

In some embodiments, the controller 15 may match the blocks corresponding to each other using the per-block color information and brightness information. In this case, since computation of the controller 15 becomes complicated, a processing speed may be reduced, but matching accuracy may be further increased.

The image processing apparatus 10 may synthesize the first image and the second image according to the result of matching to generate a third image (S140).

For example, the controller 15 may synthesize the color image of the first image and the second image having high resolution to generate the third image. As the result of analysis, the third image having the color accuracy of the first image and the brightness and resolution of the second image may be generated.

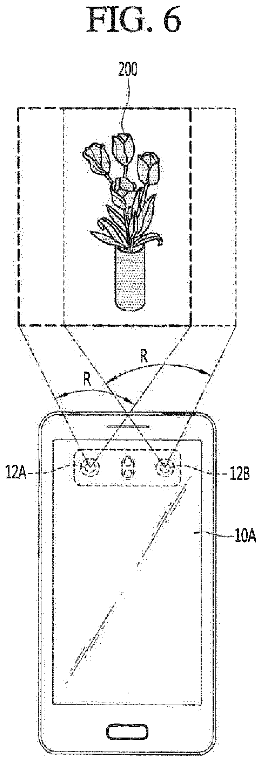

FIGS. 6 to 8 are diagrams schematically showing the method of operating the image processing apparatus shown in FIG. 5.

Referring to FIGS. 6 to 8, the image processing apparatus 10A (e.g., a mobile terminal) may capture an object 200 using the first image sensor 12A and the second image sensor 12B. The first image sensor 12A and the second image sensor 12B may correspond to the first image sensor 12A and the second image sensor 12B shown in FIG. 3 or 4, respectively. In this case, the second image 300B may have higher brightness and resolution than the first image 300A or may have lower color accuracy than the first image 300A.

On the assumption that the angles of view R of the first image sensor 12A and the second image sensor 12B are the same, the sizes of the objects 200 respectively included in the first image 300A and the second image 300B may be substantially equal. However, since the physical positions of the first image sensor 12A and the second image sensor 12B are different from each other, the display regions of the first image 300A and the second image 300B may be different from each other.

Accordingly, the controller 15 may recognize a common display region (OVR) of the first image 300A and the second image 300B and crop the remaining region excluding the common display region OVR of each of the first image 300A and the second image 300B.

The controller 15 may synthesize the cropped first image 300A' and the cropped second image 300B' to generate a third image 300C. For example, the controller 15 may synthesize the color information of the first image 300A' and the second image 300B' having high resolution to generate the third image 300C.

At this time, due to a difference in point of view between the first image sensor 12A and the second image sensor 12B, disparity may occur between the first image 300A' and the second image 300B'. Accordingly, as described above in step S130 of FIG. 15, the controller 15 may match the blocks corresponding to each other using the per-block color information of the first image 300A' and the second image 300B', thereby eliminating disparity.

The controller 15 may synthesize the first image 300A' and the second image 300B' based on the result of matching to generate the third image 300C. Specifically, the controller 15 may perform synthesis operation based on the second image 300B' having high brightness and resolution using the color information of the first image 300A'.

The generated third image 300C may have higher brightness and resolution than the first image 300A and may have higher color accuracy than the second image 300B. That is, by synthesizing the first image 300A and the second image 300B, it is possible to generate the third image 300C having higher quality.

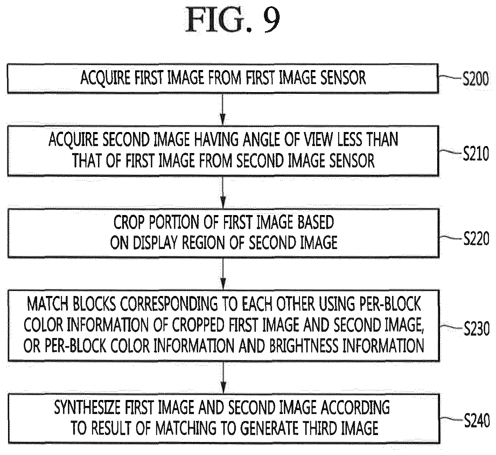

FIG. 9 is a flowchart illustrating a method of operating an image processing apparatus according to an embodiment of the present invention.

Referring to FIG. 9, the image processing apparatus 10 may acquire a first image from the first image sensor 12A (S200). In addition, the image processing apparatus 10 may acquire a second image having an angle of view less than that of the first image from the second image sensor 12B (S210).

The first image and the second image may be acquired at the same time, without being limited thereto.

The angle of view of the second image sensor 12B may be less than that of the first image sensor 12A. In particular, the second image sensor 12B may function as a zoom camera. In this case, the second image may correspond to a zoom image of a portion of the first image.

Meanwhile, generally, as the angle of view of the image sensor is decreased, the brightness of the acquired image may be decreased. In the present invention, since the second image sensor 12B having a small angle of view has a white pixel W, the brightness of the acquired image may not be decreased. In particular, if the second image sensor 12B is implemented in the form of the pixel array PA3 of FIG. 4, the brightness of the second image may be higher than that of the first image.

That is, as described above in steps S100 and S110 of FIG. 5, since the second image sensor 12B includes the white pixel W instead of the green pixel G, the second image may have higher brightness and resolution than the first image. In contrast, the second image sensor 12B does not include the green pixel G and restores green through software correction using brightness information, red color information and blue color information. Accordingly, the second image may have lower color accuracy than the first image.

The image processing apparatus 10 may crop the first image based on the display region of the second image (S220).

The controller 15 may crop a portion of the first image, which does not overlap the display region of the second image. In some embodiments, the controller 15 may perform crop operation to further include the display region of the second image and an extra region.

The size of the cropped first image may be less than that of the second image. Accordingly, the controller 15 may increase the size of the first image to be equal to that of the second image.

The image processing apparatus 10 may match blocks corresponding to each other using the per-block color values of the cropped first image and the second image or the per-block color value and brightness value (S230).

According to the result of matching, the image processing apparatus 10 may synthesize the first image and the second image to generate a third image (S240).

Steps S230 and S240 are substantially equal to steps S130 and S140 of FIG. 5 and thus a description thereof will be omitted.

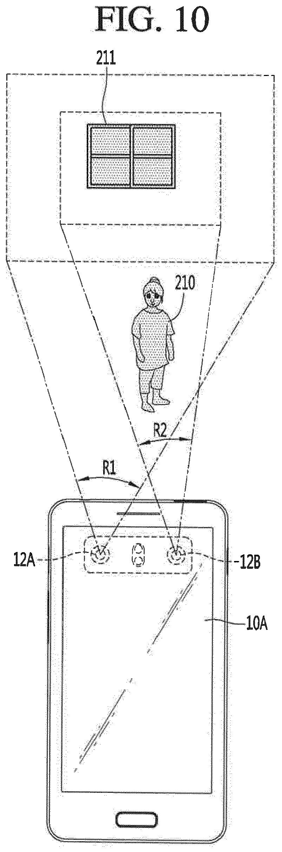

FIGS. 10 to 13 are diagrams showing the method of operating the image processing apparatus shown in FIG. 9 in detail.

Referring to FIGS. 10 to 11, the image processing apparatus 10A (e.g., a mobile terminal) may capture objects 210 and 211 using the first image sensor 12A and the second image sensor 12B. The first image sensor 12A and the second image sensor 12B may correspond to the first image sensor 12A and the second image sensor 12B shown in FIG. 3 or 4. In this case, the second image 300B may have higher brightness and resolution of the first image 300A and have lower color accuracy than the first image 300A.

The image processing apparatus 10A may include the first image sensor 12A and the second image sensor 12B having different angles of view. For example, if the angle of view of the first image sensor 12A is a first angle of view R1, the angle of view of the second image sensor 12B may be a second angle of view R2 less than the first angle of view R1. That is, the second image sensor 12B may function as a zoom camera for zooming in and capturing the objects 210 and 211. As a result, the display region of the first image 310A may be wider than that of the second image 310B.

Meanwhile, the physical positions of the first image sensor 12A and the second image sensor 12B are different from each other, and the distance between the first object 210 (person) and the image processing apparatus 10A and the distance between the second object 211 (window) and the image processing apparatus 10A are different from each other.

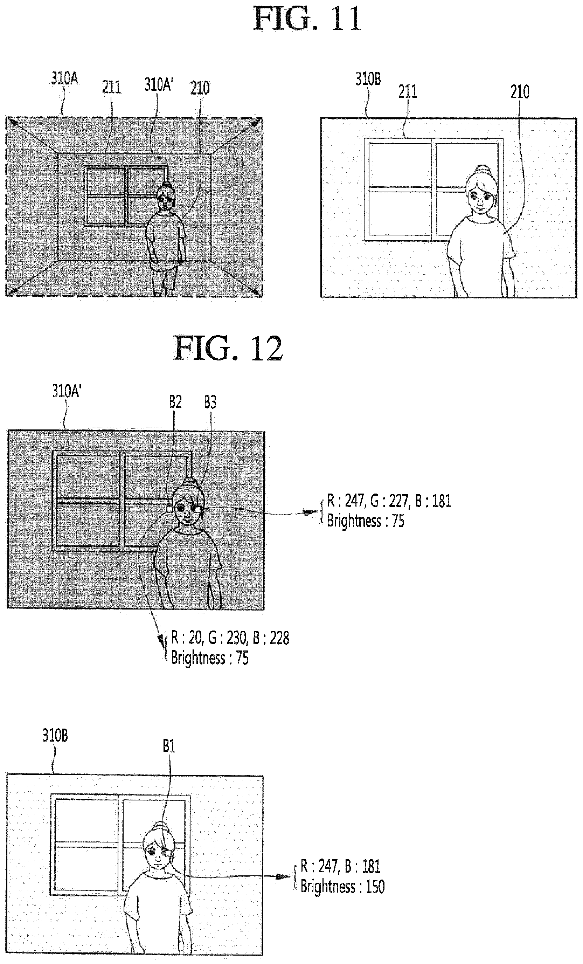

As a result, as shown in FIG. 11, the relative positions of the person and the window in the first image 310A and the second image 310B may be different from each other.

The controller 15 may crop a portion of the first image 310A based on the display region of the second image 310B. The cropped first image 310A' may display the region substantially equal to that of the second image 310B.

The size of the cropped first image 310A' may be less than that of the second image 310B. Accordingly, the controller 15 may increase the size of the first image 310A' to suit the size of the second image 310B.

Referring to FIGS. 12 to 13, the controller 15 may synthesize the first image 301A' and the second image 310B to generate a third image 310C.

Similarly to FIGS. 6 to 8, since the brightness and resolution of the second image 310B are higher than those of the first image 310A', the controller 15 may perform synthesis operation using the color information of the first image 310A' based on the second image 310B.

The controller 15 may search for blocks of the first image 310A' corresponding to the blocks of the second image 310B using the per-block color image information of the first image 310A' and the second image 310B.

For example, the controller 15 may search for the blocks having color information equal or similar (a color information difference is within a reference value) to the color information (e.g., the statistical value of the red color or the statistical value of the blue color) of the first block B1 of the second image 310B. In this case, the controller 15 may perform search in consideration of disparity between the first image 310A' and the second image 310B.

That is, the controller 15 may compare the color information of the second block B2 located at the same position as the first block B1 among the blocks of the first image 310A' and the blocks located within a predetermined distance from the second block B2 with the color information of the first block B1.

For example, the controller 15 may determine a third block B3 having the same color information as the red color information R: 247 and/or the blue color information B: 181 of the first block B1 among the blocks of the first image 310A' as the block corresponding to the first block B1. The controller 15 may perform synthesis operation of replacing the color information R:247, G: 227 and B:181 of the third block B3 with the color information of the first block B1. Similarly, the controller 15 may perform synthesis operation of replacing the color information of each of the blocks of the second image 310B with the color information of the block of the first image 310A' corresponding to each of the blocks.

Although not shown, if the first image 301A' includes a plurality of blocks having the same color information as the first block B1, the controller 15 may determine a block closest to the first block B1 as a corresponding block. Alternatively, the controller 15 may determine a block having brightness information corresponding to the brightness information of the first block B1 as the corresponding block. Due to a difference in properties between the first image sensor 12A and the second image sensor 12B, the absolute brightness of the first image 310A' and the absolute value of the second image 310B may be different from each other. For example, if the brightness of the second image 310B is twice that of the first image 310A', the controller 15 may determine the block having brightness of "75" corresponding to half the brightness of "150" of the first block B1 among the blocks of the first image 310A' having the same color information as the first block B1 as the block corresponding to the first block B1.

Since the second image 310B has higher resolution than the first image 310A', the controller 15 may synthesize the color information of the first image 310A' based on the second image to generate the third image 310C, thereby providing an image having higher quality.

If only brightness information is used as in the conventional method, the controller 15 may perform synthesis operation by matching a block having color information different from that of the first block B1 and having brightness information equal or similar to that of the first block B1 with the first block B1. As a result, when color errors occur in a portion of the third image, thereby deteriorating image quality. In order to minimize this problem, complexity of an algorithm applied to image synthesis is increased, thereby decreasing an image synthesis speed and increasing power consumption.

In contrast, since the image processing apparatus 10 according to the embodiment of the present invention performs synthesis operation based on the color information of the first image and the second image, it is possible to minimize color errors of the image generated by the result of synthesis and to provide an image having high quality. In addition, since the image processing apparatus 10 may more simply perform synthesis operation using the per-block color information, it is possible to provide positive effects in terms of the image synthesis speed and power consumption.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices.

The above exemplary embodiments are therefore to be construed in all aspects as illustrative and not restrictive. The scope of the invention should be determined by the appended claims.

## Claims

1. An image processing apparatus comprising:
a first image sensor having a first pixel array including blocks each including a red pixel, a green pixel and a blue pixel;
a second image sensor having a second pixel array including blocks each including at least one of a red pixel and a blue pixel, and a white pixel; and
a controller configured to generate a third image using a first image acquired from the first image sensor and a second image acquired from the second image sensor,
wherein the controller generates the third image based on color information of the first image and the second image, and
wherein the controller searches for a second block having color information, a difference with first color information of which is within a reference value, among blocks included in the first image, using the first color information including at least one of red color information and blue color information of a first block included in the second image, and replaces the color information of the first block with the color information of the second block based on the result of the search.

2. The image processing apparatus according to claim 1, wherein the controller searches for the second block using color information and brightness information of the first block.

3. The image processing apparatus according to claim 1,
wherein the first image sensor and the second image sensor are different in terms of a point of view, and
wherein the controller crops a remaining region excluding a common region of the first image and the second image and generates the third image using the cropped first and second images.

4. The image processing apparatus according to claim 1,
wherein an angle of view of the second image sensor is less than that of the first image sensor, and
wherein the controller crops a portion of the first image to correspond to a display region of the second image and generates the third image using the cropped first image and the second image.

5. The image processing apparatus according to claim 1, wherein the second pixel array of the second image sensor includes blocks having a size of 2×2 pixels and including the red pixel, the blue pixel and two white pixels.

6. The image processing apparatus according to claim 1, wherein the second pixel array of the second image sensor includes blocks having a size of 2×2 pixels and including any one of the red pixel and the blue pixel, and three white pixels.

7. The image processing apparatus according to claim 6, wherein a color pixel of a first block included in the second pixel array and a color pixel of a second pixel adjacent to the first block in a horizontal direction or a vertical direction are different from each other.

8. A mobile terminal comprising:
the image processing apparatus according to claim 1; and
a display unit configured to display the third image ,
wherein the controller is further configured to control operation of the first image sensor, the second image sensor and the display unit.

9. The mobile terminal according to claim 8, wherein the controller synthesizes a first image and a second image based on color information of the first image acquired from the first image sensor and color information of the second image acquired from the second image sensor and generates a third image based on the result of synthesis.

10. The mobile terminal according to claim 9,
wherein at least a portion of a region included in the first image and at least a portion of a region included in the second image correspond to each other, and
wherein the controller crops a remaining region excluding the portions of the first and second images corresponding to each other and generates the third image using the cropped first and second images.

11. The mobile terminal according to claim 9, further comprising at least one of a memory configured to store the generated third image and a communication unit configured to transmit the generated third image to the outside.

12. The mobile terminal according to claim 8, wherein the second pixel array includes blocks having a size of 2×2 pixels and including any one of the red pixel and the blue pixel, and three white pixels.

13. The mobile terminal according to claim 12, wherein a color pixel of a first block included in the second pixel array and a color pixel of a second block adjacent to the first block in a horizontal direction or a vertical direction are different from each other.

## Patentansprüche

1. Bildverarbeitungsvorrichtung umfassend
einen ersten Bildsensor mit einem ersten Pixelarray, das Blöcke enthält, die jeweils ein rotes Pixel, ein grünes Pixel und ein blaues Pixel enthalten;
einen zweiten Bildsensor mit einem zweiten Pixelarray, das Blöcke enthält, die jeweils mindestens aus einem roten Pixel und einem blauen Pixel und ein weißes Pixel enthalten; und
eine Steuerung, die konfiguriert ist, ein drittes Bild unter Verwendung eines ersten Bildes, das von dem ersten Bildsensor erfasst wird, und eines zweiten Bildes, das von dem zweiten Bildsensor erfasst wird, zu erzeugen,
wobei die Steuerung das dritte Bild auf der Grundlage von Farbinformationen des ersten Bildes und des zweiten Bildes erzeugt, und
wobei die Steuerung nach einem zweiten Block mit Farbinformationen sucht, wobei eine Differenz von deren ersten Farbinformationen innerhalb eines Referenzwertes liegt, unter den in dem ersten Bild enthaltenen Blöcken, unter Verwendung der ersten Farbinformationen, die mindestens eines aus roten Farbinformationen und blauen Farbinformationen eines ersten Blocks enthalten, der in dem zweiten Bild enthalten ist, und die Farbinformationen des ersten Blocks durch die Farbinformationen des zweiten Blocks auf der Grundlage des Ergebnisses der Suche ersetzt.

2. Bildverarbeitungsvorrichtung nach Anspruch 1, wobei die Steuerung den zweiten Block unter Verwendung von Farbinformationen und Helligkeitsinformationen des ersten Blocks sucht.

3. Bildverarbeitungsvorrichtung nach Anspruch 1,
wobei der erste Bildsensor und der zweite Bildsensor in Bezug auf einen Blickwinkel unterschiedlich sind, und
wobei die Steuerung einen verbleibenden Bereich mit Ausnahme eines gemeinsamen Bereichs des ersten Bildes und des zweiten Bildes zuschneidet und das dritte Bild unter Verwendung der zugeschnittenen ersten und zweiten Bilder erzeugt.

4. Bildverarbeitungsvorrichtung nach Anspruch 1,
wobei ein Blickwinkel des zweiten Bildsensors kleiner als der des ersten Bildsensors ist, und
wobei die Steuerung einen Abschnitt des ersten Bildes zuschneidet, um einem Anzeigebereich des zweiten Bildes zu entsprechen, und das dritte Bild unter Verwendung des zugeschnittenen ersten Bildes und des zweiten Bildes erzeugt.

5. Bildverarbeitungsvorrichtung nach Anspruch 1, wobei das zweite Pixelarray des zweiten Bildsensors Blöcke enthält mit einer Größe von 2x2 Pixeln und mit dem roten Pixel, dem blauen Pixel und zwei weißen Pixeln.

6. Bildverarbeitungsvorrichtung nach Anspruch 1, wobei das zweite Pixelarray des zweiten Bildsensors Blöcke enthält mit einer Größe von 2x2 Pixeln enthält und mit einem aus dem roten Pixel oder dem blauen Pixel und mit drei weißen Pixeln.

7. Bildverarbeitungsvorrichtung nach Anspruch 6, wobei sich ein Farbpixel eines ersten Blocks, der in der zweiten Pixelmatrix enthalten ist, und ein Farbpixel eines zweiten Pixels, das in einer horizontalen Richtung oder einer vertikalen Richtung benachbart ist zu dem ersten Block, voneinander unterschiedlich sind.

8. Mobiles Endgerät umfassend:
die Bildverarbeitungsvorrichtung nach Anspruch 1; und
eine Anzeigeeinheit, die konfiguriert ist, das dritte Bild anzuzeigen,
wobei die Steuerung ferner konfiguriert ist, den Betrieb des ersten Bildsensors, des zweiten Bildsensors und der Anzeigeeinheit zu steuern.

9. Mobiles Endgerät nach Anspruch 8, wobei die Steuerung ein erstes Bild und ein zweites Bild auf der Grundlage von Farbinformationen des ersten Bildes, die von dem ersten Bildsensor erfasst werden, und Farbinformationen des zweiten Bildes, die von dem zweiten Bild erfasst werden, synthetisiert und ein drittes Bild auf der Grundlage des Ergebnisses der Synthese erzeugt.

10. Mobiles Endgerät nach Anspruch 9,
wobei mindestens ein Abschnitt einer Region, die in dem ersten Bild enthalten ist, und mindestens ein Abschnitt einer Region, die in dem zweiten Bild enthalten ist, einander entsprechen, und
wobei die Steuerung einen verbleibenden Bereich mit Ausnahme der Abschnitte des ersten und des zweiten Bildes, die einander entsprechen, zuschneidet und das dritte Bild unter Verwendung des zugeschnittenen ersten und zweiten Bildes erzeugt.

11. Mobiles Endgerät nach Anspruch 9, ferner umfassend mindestens eines aus einem Speicher, der konfiguriert ist, das erzeugte dritte Bild zu speichern, und einer Kommunikationseinheit, die konfiguriert ist, dass das erzeugte dritte Bild nach außen zu übertragen.

12. Mobiles Endgerät nach Anspruch 8, wobei das zweite Pixelarray Blöcke enthält mit einer Größe von 2x2 Pixeln und mit einem aus dem roten Pixel oder dem blauen Pixel und mit drei weißen Pixel.

13. Mobiles Endgerät nach Anspruch 12, wobei ein Farbpixel eines ersten Blocks, der in dem zweiten Pixelarray enthalten ist, und einem Farbpixel eines zweiten Blocks, der in einer horizontalen Richtung oder einer vertikalen Richtung benachbart ist zu dem ersten Block, voneinander verschieden sind.

## Revendications

1. Appareil de traitement d'image comprenant :
un premier capteur d'image ayant un premier ensemble de pixels comprenant des blocs chacun contenant un pixel rouge, un pixel vert et un pixel bleu ;
un second capteur d'image ayant un second ensemble de pixels comprenant des blocs chacun contenant un pixel rouge et/ou un pixel bleu, et un pixel blanc ; et
un organe de commande conçu pour générer une troisième image à l'aide la première image acquise par le premier capteur d'image et à l'aide d'une seconde image acquise par le second capteur d'image
l'organe de commande générant la troisième image en fonction des informations de couleur de la première et de la deuxième image, et
l'organe de commande recherchant un second bloc ayant des informations de couleur, une différence avec les premières informations de couleur, se trouvant dans une valeur de référence, parmi les blocs compris dans la première image à l'aide des premières informations de couleur comprenant des informations relatives à la couleur rouge et/ou des informations relatives à la couleur bleue d'un premier bloc compris dans la seconde image, et remplaçant les informations relatives à la couleur du premier bloc par les informations relatives à la couleur du second bloc en fonction du résultat de la recherche.

2. Appareil de traitement d'image selon la revendication 1, l'organe de commande recherchant le second bloc à l'aide des informations relatives à la couleur et des informations relatives à la luminosité du premier bloc.

3. Appareil de traitement d'image selon la revendication 1, le premier capteur d'image et le second capteur d'image étant différents en termes de point de vue, et
l'organe de commande rognant une région restante sauf une région commune à la première image et à la deuxième image et générant la troisième image à l'aide de la première et de la deuxième image.

4. Appareil de traitement d'image selon la revendication 1,
un angle de vue du second capteur d'image étant inférieur à celui du premier capteur d'image, et
l'organe de commande rognant une partie de la première image pour qu'elle corresponde à une région d'affichage de la deuxième image et générant la troisième image à l'aide de la première image et de la deuxième image rognées.

5. Appareil de traitement d'image selon la revendication 1, le second ensemble de pixels du second capteur d'image comprenant des blocs ayant une taille de 2x2 pixels et contenant le pixel rouge, le pixel bleu et deux pixels blancs.

6. Appareil de traitement d'image selon la revendication 1, le second ensemble de pixels du second capteur d'image comprenant des blocs ayant une taille de 2x2 pixels et contenant n'importe quel pixel parmi le pixel rouge et le pixel bleu, et trois pixels blancs.

7. Appareil de traitement d'image selon la revendication 6, un pixel de couleur d'un premier bloc compris dans le second ensemble de pixels et un pixel de couleur d'un second ensemble de pixels adjacent au premier bloc dans le sens horizontal ou dans le sens vertical étant différents l'un de l'autre.

8. Terminal mobile comprenant :
l'appareil de traitement d'image selon la revendication 1 ; et
une unité d'affichage conçue pour afficher la troisième image,
l'organe de commande étant en outre conçu pour commander le fonctionnement du premier capteur d'image du second capteur d'image et de l'unité d'affichage.

9. Terminal mobile selon la revendication 8, l'organe de commande combinant une première image et une seconde image sur la base des informations relatives à la couleur de la première image acquise par le premier capteur d'image et sur la base des informations relatives à la couleur de la seconde image acquise par le second capteur d'image et générant une troisième image en fonction du résultat de la combinaison.

10. Terminal mobile selon la revendication 9, au moins une partie d'une région comprise dans la première image et au moins une partie d'une région comprise dans la seconde image correspondant l'une à l'autre et
l'organe de commande rognant une région restante sauf les parties de la première image et de la seconde image correspondant l'une à l'autre et générant la troisième image à l'aide de la première image et de la seconde image rognées.

11. Terminal mobile selon la revendication 9, comprenant en outre une mémoire conçue pour mémoriser la troisième image générée et/ou une unité de communication conçue pour transmettre la troisième image à l'extérieur.

12. Terminal mobile selon la revendication 8, le second ensemble de pixels comprenant des blocs ayant une taille de 2x2 pixels et comprenant n'importe quel pixel parmi le pixel rouge et le pixel bleu, et trois pixels blancs.

13. Terminal mobile selon la revendication 12, un pixel de couleur d'un premier bloc compris dans le second ensemble de pixels et un pixel de couleur d'un second bloc adjacent au premier bloc dans un sens horizontal ou dans un sens vertical étant différents l'un de l'autre.
